# EUROPEAN PATENT SPECIFICATION

(11) **EP 3 979 376 B1**
(45) Date of publication and mention of the grant of the patent: **17.12.2025**
(21) Application number: 21200222.4
(22) Date of filing: 30.09.2021
(51) Int. Cl.: B60H 1/00, B60H 1/32, H01M 8/0432, H01M 8/04029, H01M 8/04007, H01M 8/04291, H01M 8/04701

(54) **VEHICLE COMPRISING AN IMPROVED COOLING SYSTEM FOR A FUEL CELL MODULE**
FAHRZEUG MIT VERBESSERTEM KÜHLSYSTEM FÜR EIN BRENNSTOFFZELLENMODUL
VÉHICULE COMPRENANT UN SYSTÈME DE REFROIDISSEMENT AMÉLIORÉ POUR UN MODULE DE PILE À COMBUSTIBLE

(30) Priority: 30.09.2020 IT 202000023101
(43) Date of publication of application: 06.04.2022
(73) Proprietor: IVECO DEUTSCHLAND AG, 89079 Ulm (DE)
(72) Inventor: VARWICK, Manuel, 89077 ULM (DE); KRUG, Christian, 89081 ULM (DE)
(74) Representative: Studio Torta S.p.A.

(56) References cited:
- DE-A1- 102019 112 444
- DE-A1- 102019 210 832
- JP-A- 2001 313 054
- JP-A- 2002 367 645
- US-B2- 10 411 275

## Description

### TECHNICAL FIELD

The present invention concerns a cooling system of a vehicle, in particular a cooling system for a work or a heavy vehicle provided with a fuel cell traction system.

### BACKGROUND OF THE INVENTION

Fuel cell traction systems are increasingly used in work/special vehicles such as rescue vehicles or tractors, and in heavy commercial vehicles, such as trucks or busses. Such vehicles are usually known as Fuel Cell Electric Vehicles (FCEV).

The use of fuel cell traction systems allows to drastically reduce the polluting emission of such vehicles. Indeed, as known, fuel cell traction systems use as fuel hydrogen that is combined with oxygen suctioned from the environment air to produce electrical energy and water.

However, it is known that the fuel cell cooling capacity has an efficiency of about 50%. Therefore, it may happen that in high environmental temperatures and in high load conditions, the heat required to be managed by the fuel cell cooling system is considerable.

Usually, the cooling system of the fuel cell is an air exchange cooling system comprising a coolant that is cooled in a radiator via airflow provided by ventilation means. In the aforementioned high temperature/high load conditions, it is clear that the ventilation means would consume a considerable amount of energy. Accordingly, the global efficiency of current system in certain operational conditions of the vehicle is low.

Examples of known system for cooling a fuel cell in a vehicle are disclosed in publications US10411275 B2, JP2001313054 A, DE102019112444 A1, DE102019210832 A1 or JP2002367645 A.

Therefore, the need is felt to increase the capacity of the cooling system for a fuel cell vehicle in order to reduce its energy consumption.

An aim of the present invention is to satisfy the above mentioned needs in a cost effective and optimized manner.

### SUMMARY OF THE INVENTION

The aforementioned aim is reached by a vehicle provided with a cooling system as claimed in the appended independent claim 1.

Preferred embodiments of the invention are realized according to the dependent claims.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view showing in a schematic way a fuel cell electrical vehicle comprising a first disclosure of a cooling system not encompassed by the wording of the claims but useful for understanding the invention.
- Figure 2A is a perspective view showing in a schematic way a portion of the cooling system according a second disclosure not encompassed by the wording of the claims but useful for understanding the invention.
- Figure 2B is a perspective view showing in a schematic way a portion of the cooling system according a third disclosure not encompassed by the wording of the claims but useful for understanding the invention ; and
- Figure 2C is a perspective view showing in a schematic way a portion of the cooling system according to a fourth disclosure not encompassed by the wording of the claims but useful for understanding the invention.

### DETAILED DESCRIPTION OF THE INVENTION

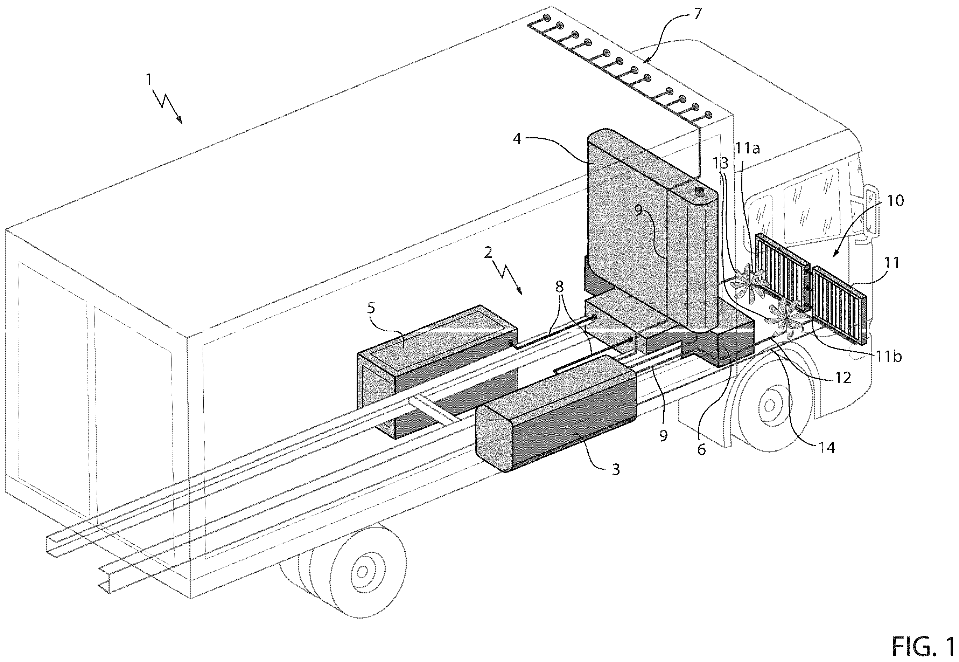

In figure 1 the reference number 1 discloses a vehicle 1, e.g. as shown exemplarily a truck, provided with a fuel cell traction system 2.

Exemplarily and as per se known, the fuel cell traction system 2 comprises at least a fuel cell module 3, a reservoir 4 suitable for storing hydrogen and a battery module 5 suitable for storing electrical energy.

The vehicle 1 accordingly comprises a traction module 6 configured to use electrical energy stored in battery module 5 to provide torque to the wheel of the vehicle. The electrical energy stored in the battery module 5 is furthermore used to provide electrical energy to all the operational elements of the vehicle, e.g. utilities (such as display, conditioning system etc.) or work elements (such as actuators).

Furthermore, the vehicle 1 is provided by an air inlet module 7 configured to provide air to fuel cell module 3, electrical connections 8 connecting the battery module 5 to traction module 6 and to fuel cell module 3 and conduits 9 fluidly connecting the air inlet module 7 and the reservoir 4 to fuel cell module 3.

The vehicle 1 moreover comprises a cooling system 10 configured to allow the circulation of a coolant through the fuel cell module 3 to maintain the latter in a predetermined temperature range.

Cooling system 10 comprises at least a heat exchanger 11, such as a radiator, fluidly connected thanks to respective conduits 12 to the fuel cell module 3, ventilation means 13 configured to provide an airflow F towards the heat exchanger 11 and pumping means (not shown) configured to allow the recirculation of the coolant in the cooling system 10.

Preferably, the vehicle may comprise sensor means (not shown) configured to detect a temperature indicative of the temperature status of the fuel cell module 3 and an electronic unit (not shown) electronically connected to such sensor means, to pumping means and to ventilation means 13 and comprising elaboration means configured to elaborate the temperature value detected by sensor means to control accordingly pumping means and ventilation means 13 thereby reaching a predefined temperature in fuel cell module 3. Such elaboration may be a closed loop control.

According to the above configuration, the coolant is configured to flow out from a first opening 11a of the heat exchanger 11 at a low temperature directed to fuel cell module 3. When reached the fuel cell module 3, the coolant exchange heat with the latter, e.g. passing on its housing or inside the module 3 itself, thereby cooling the module 3 and increasing its temperature. Then, the coolant fluid, at high temperature, flow in a second opening 11b of the heat exchanger 11 for being cooled by the airflow F provided by ventilation means 13.

The fuel cell module 3 is fluidly connected to the heat exchanger 11 so as to drain at least part of the condensed water produced by the fuel cell module 3 to subcool the temperature of the heat exchanger 11 and the temperature of the airflow F provided by ventilation means 13.

The fuel cell module 3 is fluidly connected to heat exchanger 11 via at least a conduit 14 spilling the condensed water from fuel cell module 3 and collecting the latter towards the heat exchanger to allow its cooling.

According to a not shown disclosure, the conduit 14 directly fluidly connects the fuel cell module 3 to an outer surface of the heat exchanger to flood the latter with the condensed water.

According to the invention, the conduit 14 fluidly further connects the fuel cell module 3 to an evaporative cooler 15 fluidly interposed in the airflow F between the ventilation means (13) and the heat exchanger (11). As known, an evaporative cooler is a device configured to allow a cooling thanks to the passage of state of water from liquid to gaseous phase, i.e. through its evaporation.

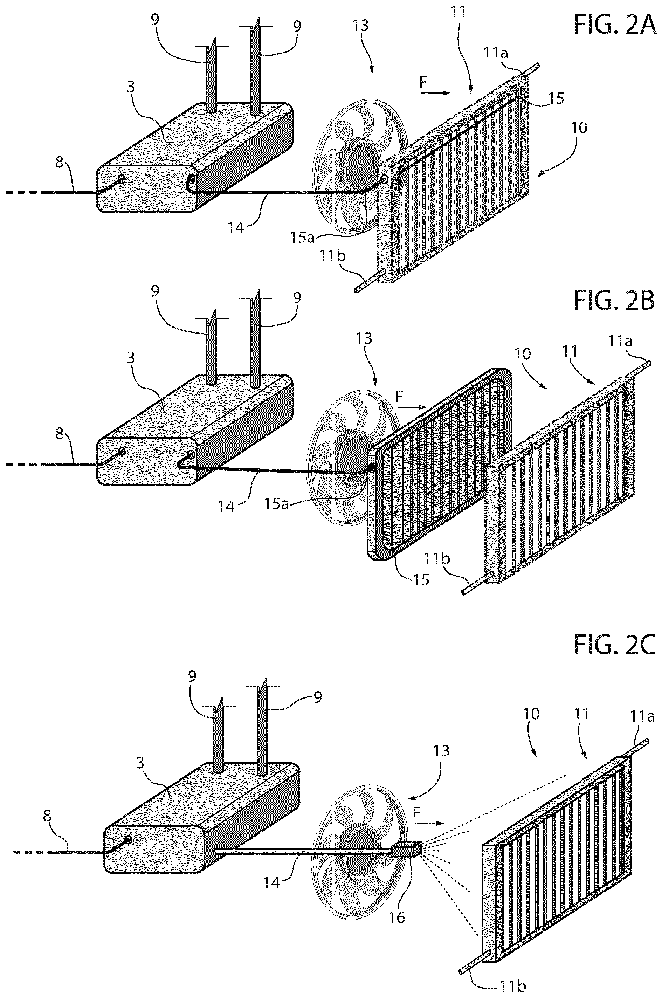

According to the disclosure of figure 2A, the evaporative cooler 15 is realized integrated in the heat exchanger 11. More preferably, it is arranged to allow the fluid spilled by fuel cell module 3 to flow down from the top of the heat exchanger 11 on its outside surface.

In particular, the evaporative cooler 15 comprises an inlet 15a configured to provided the fluid to a conduit provided with a plurality of openings to allow the drain of the condensed water on the outside surface of the heat exchanger 11.

According to the disclosure of figure 2B, the evaporative cooler 15 is realized separated with respect to heat exchanger 11 and interposed between the ventilation means 13 and the heat exchanger 11 so that the airflow is cooled before cooperating with the heat exchanger 11.

In particular the evaporative cooler 15 comprises an inlet 15a respectively fluidly connected to conduit 14 and to a plurality of openings directly opened to environment and configured to allow the drain of the condensed water on a support element, e.g. a net or a paper-like element, configured to allow the passage of air flow F.

According to the disclosure of figure 2C, the fuel cell module 3 is fluidly connected to the heat exchanger 11 via a sprayer 16 realized separated with respect to heat exchanger 11 and configured to moisten an outer surface of heat exchanger 11.

In particular, the sprayer 15 is configured to moisten the outer surface of the heat exchanger 11 invested by the airflow F.

The operation of the above-described vehicle 1 comprising a cooling system 10 according to the invention is the following.

As said, the coolant is configured to flow out from a first opening 11a of the heat exchanger 11 at a low temperature directed to fuel cell module 3. When reached the fuel cell module 3, the coolant exchange heat with the latter, e.g. passing on its housing or inside the module 3 itself, thereby cooling the module 3 and increasing its temperature. Then, the coolant, at high temperature, flow in a second opening 11b of the heat exchanger 11 for being cooled by the airflow F provided by ventilation means 13.

Thanks to the use of the condensed water spilled via conduit 14, the heat exchanger 11 is subcooled in addition to airflow F.

According to the disclosure of figure 2A, the condensed water passing directly on the outside surface heat exchanger 11, helps the cooling of the coolant in addition to the airflow F.

According to the disclosure of figure 2B, the condensed water passes in evaporative cooler 15 thereby subcooling the airflow F before he reaches the heat exchanger 11, thereby increasing the thermal exchange.

According to the disclosure of figure 2C, the condensed water passes in sprayer 16 that moisten the surface of heat exchanger 11 invested by airflow F, thereby helping the cooling of the coolant in addition to the airflow F because of the evaporation of such sprayed water.

In view of the above operation, it is clear that the present invention is directed to the use of the condensed water spilled from the fuel cell module 3 to cool the heat exchanger 11 and cool the airflow F before he reaches the heat exchanger 11.

Furthermore, while not being part of the invention, a method for cooling a fuel cell module 3 of a vehicle as described above comprises the steps of:
i) Detecting a temperature indicative of the temperature of said fuel cell module 3;
ii) If the detected temperature is comprised in a predefined range, return to the detection step, otherwise proceed to the further step
iii) Calculating an amount of condensed water to be spilled;
iv) Spilling said calculated amount of the condensed water of a fuel cell module 3;
v) Directing the condensed water to a cooling system 10 for cooling said fuel cell module 3;
vi) Using the condensed water to cool the heat exchanger 11 and/or the flow of air F impacting through latter.

The use step may further comprise to moisten a surface of the heat exchanger into which impacts the airflow.

The calculated amount is advantageously calculated to optimize the energy consumption of ventilation means 13 and pumping means according to current operational status of the vehicle 1.

Such optimization may be achieved thanks to different mathematical methods, e.g. thanks to minimum square method, and thermodynamic relationships between the energy consumption of ventilation means 13 and pumping means and the cooling of heat exchange/airflow F. Since such optimization may be achieved via different mathematic and thermodynamic relationships, it is not further described hereinafter.

The method may further comprise a control step to control the ventilation means 13 and pumping means in function the amount of condensed water spilled by the fuel cell module 3.

In view of the foregoing, the advantages of the vehicle 1 comprising a cooling system 10 according to the invention are apparent.

Thanks to the use of condensed water, normally discharged freely in the environment, in cooling the heat exchanger 11 and the airflow F, the efficiency of the cooling system 10 is increased.

Indeed, the water is used for cooling the heat exchanger 11 by contact, by convection and by evaporation thereby allowing to reduce the airflow F needed by ventilation means 13.

Accordingly, the efficiency of the entire vehicle 1 is increased during some operational conditions wherein there is a huge need of the cooling system 10.

Moreover, in normal operational conditions, by calculating an amount of spilled condensed water, it is possible to optimize the energy absorption of ventilation means 13 by providing cooling thanks to such condensed water.

Furthermore, in very cold conditions such as in winter, the water is not discharged on the road, with possible icing problems, but evaporated on the heat exchanger 11 and/or evaporator cooler 15. Accordingly, water is evaporated in the environment without any dispersion on the water.

It is clear that modifications can be made to the described vehicle 1 comprising a cooling system 10 without departing from the scope of the invention as defined in the appended claims.

For example, the proposed elements of the fuel cell traction system 2, the typology of vehicle 1 or of cooling system 10 may comprise other elements.

Moreover, it is clear the topology of conduits and the typology of heat exchangers 11, evaporation cooler 15 or ventilation means 13 may be varied according to the dimension of the vehicle.

## Claims

1. Vehicle (1) comprising a fuel cell traction system (2) provided with at least a fuel cell module (3) and a cooling system (10) configured to allow the circulation of a coolant to said fuel cell module (3) to maintain the latter in predetermined temperature range,
said cooling system (10) comprising a heat exchanger (11) and ventilation means (13), said heat exchanger (11) being fluidly connected to said fuel cell module (3) to allow the circulation of said coolant and allowing the cooling of this latter thanks to the passage through itself of an airflow (F) provided by said ventilation means (13),
wherein said fuel cell module (3) being fluidly connected to said heat exchanger (11) via at least a conduit (14) configured to spill at least part of the condensed water generated from said fuel cell module (3) thereby collecting said condensed water towards said heat exchanger (11) to cool this latter,
**characterized in that** said conduit (14) is further configured to spill at least part of the condensed water generated from said fuel cell module (3) to an evaporative cooler (15) fluidly interposed in the airflow (F) between the ventilation means (13) and the heat exchanger (11).

2. Vehicle according to claim 1, wherein the evaporative cooler (15) is faced to said heat exchanger (11) and supported by a same support structure supporting said heat exchanger (11).

3. Vehicle according to any of the preceding claims, wherein the evaporative cooler (15) is faced to said heat exchanger (11) and realized as a separate element with respect to this latter.

4. Vehicle according to any of the preceding claims, wherein said conduit (14) further fluidly connects said fuel cell module (3) to a sprayer (16) configured to moisten said heat exchanger (11).

5. Vehicle according to claim 4, wherein said sprayer (16) is configured to moisten a surface of said heat exchanger (11) impacted by said airflow (F).

6. Vehicle according to any of the preceding claims comprising sensor means configured to detect a temperature indicative of a temperature of said fuel cell module (3) and an electronic control unit (9) configured to control the operation of said cooling system (10) and the spilling of said condensed water in function of said detected temperature.

## Patentansprüche

1. Fahrzeug (1), umfassend ein Brennstoffzellentraktionssystem (2), das mit mindestens einem Brennstoffzellenmodul (3) und einem Kühlsystem (10) versehen ist, das konfiguriert ist, um die Zirkulation eines Kühlmittels zu dem Brennstoffzellenmodul (3) zu ermöglichen, um letzteres in einem vorbestimmten Temperaturbereich zu halten,
wobei das Kühlsystem (10) einen Wärmetauscher (11) und Belüftungsmittel (13) umfasst, wobei der Wärmetauscher (11) mit dem Brennstoffzellenmodul (3) fluidisch verbunden ist, um die Zirkulation des Kühlmittels zu ermöglichen und die Kühlung dieses letzteren dank des Durchgangs eines Luftstroms (F), der durch die Belüftungsmittel (13) bereitgestellt wird, durch sich selbst zu ermöglichen,
wobei das Brennstoffzellenmodul (3) mit dem Wärmetauscher (11) über mindestens eine Leitung (14) fluidisch verbunden ist, die konfiguriert ist, um mindestens einen Teil des kondensierten Wassers, das von dem Brennstoffzellenmodul (3) erzeugt wird, zu verteilen, wodurch das kondensierte Wasser in Richtung des Wärmetauschers (11) gesammelt wird, um diesen zu kühlen,
**dadurch gekennzeichnet, dass** die Leitung (14) ferner konfiguriert ist, um mindestens einen Teil des kondensierten Wassers, das von dem Brennstoffzellenmodul (3) erzeugt wird, zu einem Verdampfungskühler (15) zu verteilen, der in dem Luftstrom (F) zwischen den Belüftungsmitteln (13) und dem Wärmetauscher (11) fluidisch angeordnet ist.

2. Fahrzeug nach Anspruch 1, wobei der Verdampfungskühler (15) dem Wärmetauscher (11) zugewandt ist und von einer selben Stützstruktur gestützt wird, die den Wärmetauscher (11) stützt.

3. Fahrzeug nach einem der vorhergehenden Ansprüche, wobei der Verdampfungskühler (15) dem Wärmetauscher (11) zugewandt ist und in Bezug auf den letzteren als ein separates Element realisiert ist.

4. Fahrzeug nach einem der vorhergehenden Ansprüche, wobei die Leitung (14) ferner das Brennstoffzellenmodul (3) mit einer Sprühvorrichtung (16) fluidisch verbindet, die konfiguriert ist, um den Wärmetauscher (11) zu befeuchten.

5. Fahrzeug nach Anspruch 4, wobei die Sprühvorrichtung (16) konfiguriert ist, um eine Oberfläche des Wärmetauschers (11), auf die der Luftstrom (F) auftrifft, zu befeuchten.

6. Fahrzeug nach einem der vorhergehenden Ansprüche, umfassend Sensormittel, die konfiguriert sind, um eine Temperatur zu erfassen, die eine Temperatur des Brennstoffzellenmoduls (3) angibt, und eine elektronische Steuereinheit (9), die konfiguriert ist, um den Betrieb des Kühlsystems (10) und das Verteilen des kondensierten Wassers in Abhängigkeit von der erfassten Temperatur zu steuern.

## Revendications

1. Véhicule (1) comprenant un système de traction par pile à combustible (2) muni d'au moins un module de pile à combustible (3) et d'un système de refroidissement (10) configuré pour permettre la circulation d'un liquide de refroidissement jusqu'audit module de pile à combustible (3) pour maintenir ce dernier dans une plage de températures prédéterminée,
ledit système de refroidissement (10) comprenant un échangeur de chaleur (11) et des moyens de ventilation (13), ledit échangeur de chaleur (11) étant raccordé de manière fluidique audit module de pile à combustible (3) pour permettre la circulation dudit liquide de refroidissement et permettant le refroidissement de ce dernier grâce au passage, à travers celui-ci, d'un flux d'air (F) fourni par lesdits moyens de ventilation (13),
dans lequel ledit module de pile à combustible (3) est raccordé de manière fluidique audit échangeur de chaleur (11) via au moins un conduit (14) configuré pour déverser au moins une partie de l'eau condensée générée par ledit module de pile à combustible (3) ce qui permet de collecter ladite eau condensée vers ledit échangeur de chaleur (11) pour refroidir ce dernier,
**caractérisé en ce que** ledit conduit (14) est en outre configuré pour déverser au moins une partie de l'eau condensée générée par ledit module de pile à combustible (3) vers un refroidisseur par évaporation (15) interposé de manière fluidique dans le flux d'air (F) entre les moyens de ventilation (13) et l'échangeur de chaleur (11).

2. Véhicule selon la revendication 1, dans lequel le refroidisseur par évaporation (15) fait face audit échangeur de chaleur (11) et est porté par une même structure de support portant ledit échangeur de chaleur (11).

3. Véhicule selon l'une quelconque des revendications précédentes, dans lequel le refroidisseur par évaporation (15) fait face audit échangeur de chaleur (11) et est réalisé comme un élément distinct par rapport à ce dernier.

4. Véhicule selon l'une quelconque des revendications précédentes, dans lequel ledit conduit (14) raccorde en outre de manière fluidique ledit module de pile à combustible (3) à un pulvérisateur (16) configuré pour mouiller ledit échangeur de chaleur (11).

5. Véhicule selon la revendication 4, dans lequel ledit pulvérisateur (16) est configuré pour mouiller une surface dudit échangeur de chaleur (11) impactée par ledit flux d'air (F).

6. Véhicule selon l'une quelconque des revendications précédentes comprenant des moyens capteurs configurés pour détecter une température indicative d'une température dudit module de pile à combustible (3) et une unité de commande électronique (9) configurée pour commander le fonctionnement dudit système de refroidissement (10) et le déversement de ladite eau condensée en fonction de ladite température détectée.
